# EUROPEAN PATENT SPECIFICATION

(11) **EP 2 979 810 B1**
(45) Date of publication and mention of the grant of the patent: **22.07.2020**
(21) Application number: 14774408.0
(22) Date of filing: 17.03.2014
(51) Int. Cl.: B64F 5/10, B64C 1/06

(54) **METHOD FOR BONDING FUSELAGE AND STRONG BACK**
VERFAHREN ZUM VERBINDEN EINES RUMPFES UND STARKEN HECKTEILS
PROCÉDÉ DE COLLAGE D'UN FUSELAGE ET D'UNE PIÈCE DE RENFORT

(30) Priority: 29.03.2013 JP 2013073092
(43) Date of publication of application: 03.02.2016
(73) Proprietor: Mitsubishi Heavy Industries, Ltd., Tokyo 108-8215 (JP)
(72) Inventor: YANAGIHARA, Hideyasu, Tokyo 108-8215 (JP)
(74) Representative: Henkel & Partner mbB
(86) International application number: PCT/JP2014/057059
(87) International publication number: WO 2014/156745

(56) References cited:
- DE-C- 677 621
- FR-A- 835 154
- FR-A- 852 865
- FR-A1- 2 821 778
- JP-A- 2006 051 557
- JP-A- 2008 521 683
- JP-A- 2010 520 104
- JP-A- 2012 525 266
- JP-A- 2013 123 794
- RU-C1- 2 042 918
- US-A1- 2006 118 235
- US-A1- 2006 182 558
- US-A1- 2008 205 763
- US-A1- 2009 261 201

## Description

### TECHNICAL FIELD

The present invention pertains to a method for bonding fuselage and to a strongback, and particularly pertains to a method for bonding fuselage and to a strongback used for manufacturing a fuselage.

### BACKGROUND ART

A method of manufacturing a fuselage of an aircraft by assembling a plurality of assemblies is known (see JP 2012-525266 A). For example, the fuselage of the aircraft is manufactured by assembling a plurality of trunk sections. One trunk section from among the plurality of trunk sections is transported, using a crane, to the vicinity of a reference trunk section from among the plurality of trunk sections. The one trunk section is then subjected to precise position adjustment and bonded to the reference trunk section.

US 2008/0205763 A1 discloses a method for assembling modular fuselage sections of an aircraft, wherein fuselage sections carried on wheel lift systems are moved into end-to-end contact and are joined together using various types of fasteners and connections.

US 2006/0118235 A1 discloses a one-piece barrel assembly cart for fuselage sections of an aircraft including right and left assembly cart bases that can be put together and stabilizer rings that are attached to the assembly cart base and are dimensioned to surround the fuselage section supported on the assembly cart. The document is considered closest prior art and shows the features of the preamble of independent claims 1 and 4.

### SUMMARY OF THE INVENTION

### Technical Problem

The problem to be solved by the invention is to provide a method for bonding fuselage and a strongback that simplify manufacturing of a fuselage.

### Solution to Problem

A method for bonding fuselage according to the invention comprises the features of claim 1 and includes scooping a trunk section supported by a dolly with a strongback according to the invention, disposing the trunk section at a predetermined position by displacing the strongback using a positioner, and bonding the trunk section to a reference fuselage upon the trunk section being disposed at the predetermined position.

Such a method for bonding fuselage enables the trunk section to be supported by the positioner, without the use of a crane. Therefore, according to such a method for bonding fuselage, the provision of outside fittings on the trunk section for use when using a crane may be omitted, thus enabling the fuselage to be more easily manufactured.

The method according to the invention may further include inserting a first strongback portion below the trunk section, inserting a second strongback portion below the trunk section, and assembling the first strongback portion and the second strongback portion into the strongback below the trunk section.

Such a method for bonding fuselage enables the strongback to be easily disposed below the trunk section, thus enabling the trunk section to be easily scooped up by the strongback. Therefore, according to such a method for bonding fuselage, the trunk section is easily supportable by the positioner, thus enabling the fuselage to be more easily manufactured.

The method according to the invention may also include bringing the dolly along with the trunk section close to the positioner by using a caster provided on the dolly. According to such a method for bonding fuselage, the trunk section is easily brought close to the positioner without the use of a crane, thereby enabling the fuselage to be more easily manufactured.

A strongback according to the invention comprises the features of claim 4 and includes inter alia a first strongback portion and a second strongback portion distinct from the first strongback portion. A first holding surface, a first lock pin, and a second lock pin are formed on the first strongback portion. A second holding surface, a first pin stopper, and a second pin stopper are formed on the second strongback portion. The first strongback portion is fixed to the second strongback portion by the first lock pin engaging with the first pin stopper and the second lock pin engaging with the second pin stopper. The first holding surface and the second holding surface face one trunk section from among a plurality of trunk sections to be assembled into a fuselage upon the one trunk section being scooped up by the strongback.

Such a strongback may be easily assembled below the trunk section by assembling the first strongback component and the second strongback component. This enables the strongback to be easily disposed below the trunk section. Therefore, according to such a strongback, the trunk section may be easily scooped up by the strongback, and the trunk section is easily supportable by the positioner, thus enabling the fuselage to be more easily manufactured.

The strongback may also include a plurality of pads disposed on the first holding surface and on the second holding surface. Here, the plurality of pads have a modulus of elasticity that is smaller than a modulus of elasticity of the first strongback portion.

Such a plurality of pads are sandwiched between the trunk section and one of the first holding surface and the second holding surface when the strongback scoops up the trunk section. Through elastic deformation, the plurality of pads evenly disperses the load applied to the trunk section by the strongback. Therefore, according to such a strongback, the trunk section may be more appropriately scooped up in comparison to another strongback scooping up the trunk section by direct contact with the first strongback portion and the second strongback portion.

The strongback may also include a retainer pressing the first lock pin into the first pin stopper. According to such a strongback, the second strongback portion may be reliably fixed to the first strongback portion, and the trunk portion may be appropriately scooped up by the strongback.

### Advantageous Effects of Invention

According to the method for bonding fuselage and the strongback of the invention, a trunk section is supportable by a positioner without the use of a crane, and the manufacturing of the fuselage is made easier.

### Brief Description of Drawing(s)

FIG. 1 is a perspective view illustrating a plurality of jigs used in a method for bonding fuselage.
FIG. 2 is a perspective view illustrating a plurality of jigs used in the method for bonding fuselage.
FIG. 3 is a front view illustrating a positioner and a strongback.
FIG. 4 is an exploded perspective view illustrating the strongback.
FIG. 5 is a perspective view illustrating a coupling portion of the strongback.
FIG. 6 is a perspective view illustrating a strongback transport wagon.
FIG. 7 is a perspective view illustrating a trunk body bonding system.
FIG. 8 is a flowchart illustrating a method for bonding fuselage.
FIG. 9 is a front view illustrating the strongback in a state following the execution of step S3.
FIG.10 is a front view illustrating the strongback in a state following the execution of step S4.
FIG. 11 is a front view illustrating the strongback in a state following the execution of step S5.

### Description of Embodiments

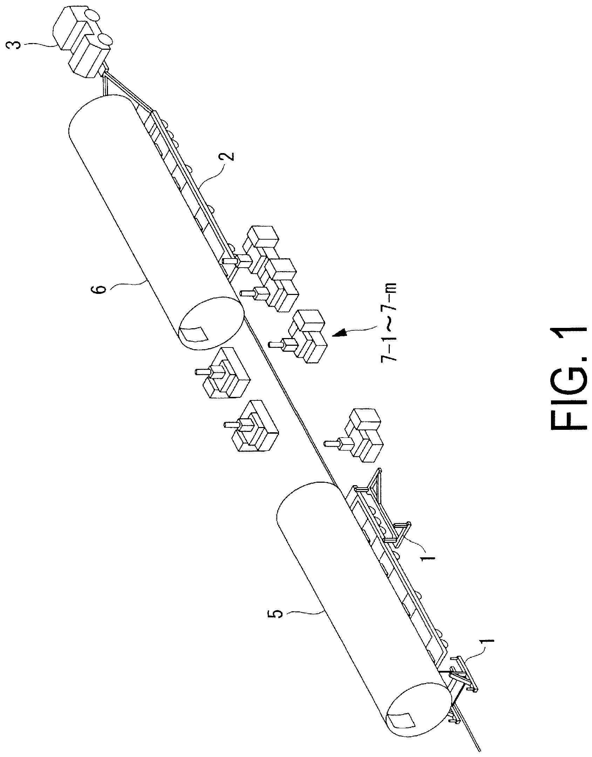

An embodiment of a method for bonding fuselage is described below, with reference to the drawings. This method for bonding fuselage is used during manufacturing of a fuselage of an aircraft and is implemented using a plurality of jigs. The plurality of jigs include a reference trunk section support 1, a dolly 2, and a tractor 3, as illustrated in FIG. 1. The fuselage is manufactured by bonding a plurality of trunk sections. Each one of the plurality of trunk sections is substantially shaped as a cylinder. The plurality of trunk sections include a reference trunk section 5 and a trunk section 6. The reference trunk section support 1 is disposed on the floor of a factory, supports the reference trunk section 5, and fixes the reference trunk section 5 to the floor of the factory.

The dolly 2 is equipped with a carrier and a plurality of casters. The trunk section 6 is loaded onto the carrier. The plurality of casters are each formed from a wheel supporting the carrier so as to be able to rotate. The wheels simplify displacement of the carrier on the floor of the factory by rolling on the floor of the factory. The tractor 3 has a coupler. The coupler couples the tractor 3 to the dolly 2. The tractor 3, being coupled to the dolly 2 by the coupler, displaces the dolly 2 through an operation by a user.

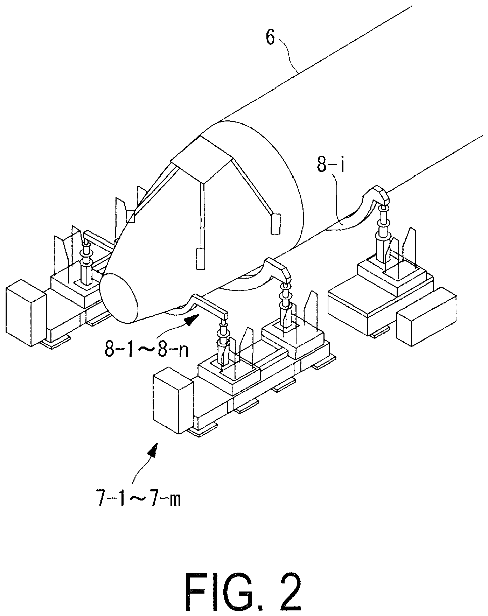

The present embodiment further uses a trunk body bonding system. As illustrated in FIG. 2, the trunk body bonding system is equipped with a plurality of positioners 7-1 to 7-m (where m = 4, 5, 6,...). The plurality of positioners 7-1 to 7-m are disposed in the vicinity of the reference trunk section 5 on the floor of the factory.

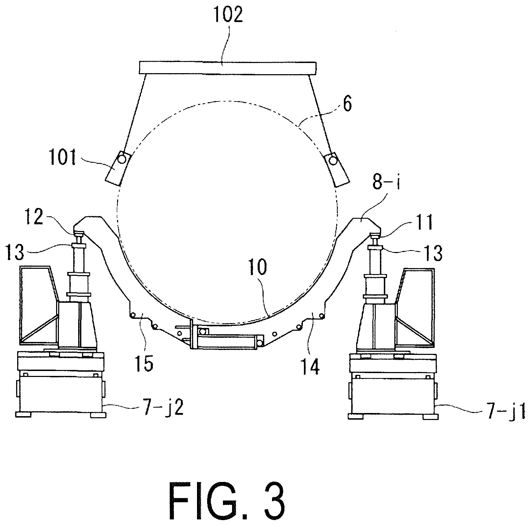

The above-described plurality of jigs further include a plurality of strongbacks 8-1 to 8-n (where n = 2, 3, 4,...) as illustrated in FIG. 2. The plurality of strongbacks 8-1 to 8-n each correspond to a different one of a plurality of portions of a lower part of the trunk section 6. A discretionary strongback 8-i (where i = 1, 2, 3,..., n) from among the plurality of strongbacks 8-1 to 8-n is formed in a bent rod shape, as illustrated in FIG. 3, being formed so as to substantially follow the arc of a semicircle.

A holding surface 10, a first positioner receptacle 11, and a second positioner receptacle 12 are formed on the strongback 8-i. The holding surface 10 is formed on an inner side of the arc formed by the strongback 8-i. The holding surface 10 is formed at a portion of a cylinder surface, so as to substantially snugly fit with a portion corresponding to the strongback 8-i from among the plurality of portions of the lower part of the trunk section 6. The first positioner receptacle 11 is formed as a protrusion, being formed at one end of the strongback 8-i. The direction of projection of the first positioner receptacle 11 is perpendicular to the axis of the cylinder surface, and perpendicular to a chord joining both ends of the strongback 8-1. This direction is vertically downward when the center of gravity of the strongback 8-i is positioned on a vertical bottom side of the chord joining both ends of the strongback 8-i. The second positioner receptacle 12 is formed as a protrusion, being formed on an opposite end of the strongback 8-i as the end of the strongback 8-i where the first positioner receptacle 11 is formed. The direction of projection of the second positioner receptacle 12 is equivalent to the direction of projection of the first positioner receptacle 11.

A discretionary positioner 7-j1 (where j1 = 1, 2, 3,..., m) from among the plurality of positioners 7-1 to 7-m is equipped with a receptacle 13. An indentation oriented vertically upward is formed in the receptacle 13.

The strongback 8-i is supported by a pair of positioners from among the plurality of positioners 7-1 to 7-m. For example, the strongback 8-i is supported by the positioner 7-j1, and by a positioner 7-j2 (where j2 = 1, 2, 3,..., m, and j2 ≠ j1) from among the plurality of positioners 7-1 to 7-m that is different from the positioner 7-j1. Here, the first positioner receptacle 11 of the strongback 8-i is positioned such that the first positioner receptacle 11 is in contact with the indentation of the receptacle 13 of the positioner 7-j1. Likewise, the second positioner receptacle 12 is positioned so as to be in contact with the indentation of the receptacle 13 of the positioner 7-j1.

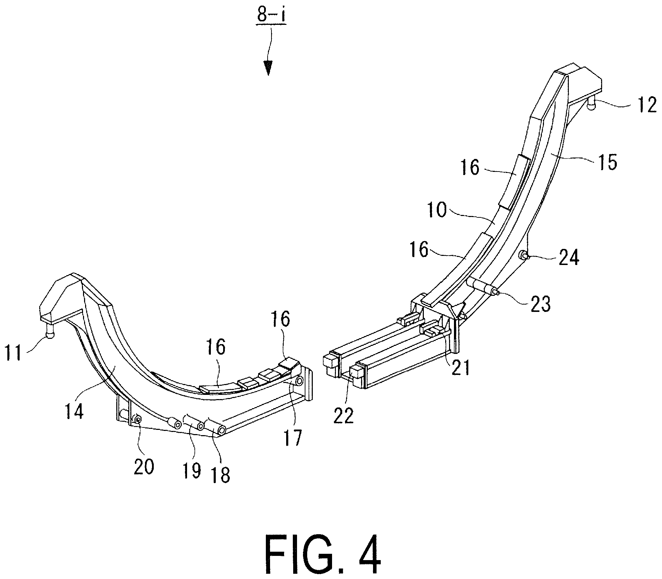

The strongback 8-i is able to be disassembled into a first strongback component 14, a second strongback component 15, and a plurality of pads 16, as illustrated in FIG. 4. The first strongback component 14 is formed from steel. The first strongback component 14 forms about half of the strongback 8-i, being formed so as to follow the arc of a fan shape having a central angle of about 90°. A portion of the holding surface 10 and the first positioner receptacle 11 are formed on the first strongback component 14.

An upper lock pin 17, a lower lock pin 18, a rotation support receptacle pin 19, and a fixing support receptacle pin 20 are each formed on the first strongback component 14. The upper lock pin 17 is formed on an end of the first strongback component 14 opposite the end where the first positioner receptacle 11 is formed. The upper lock pin 17 is formed as a protrusion. The direction of projection of the upper lock pin 17 is parallel to a normal direction of the plane in which the fan shape is formed, being perpendicular to the direction of projection of the first positioner receptacle 11. That is, the direction of projection of the upper lock pin 17 is a horizontal direction in a situation where the first strongback component 14 is assembled into the strongback 8-i and the center of gravity of the strongback 8-i is disposed on a vertically downward side of the chord joining both ends of the strongback 8-i. The lower lock pin 18 is formed in an area separated from the upper lock pin 17 by a predetermined distance toward the center of gravity of the first strongback component 14. The lower lock pin 18 is formed as a protrusion. The direction of projection of the lower lock pin 18 is equivalent to the direction of projection of the upper lock pin 17.

The rotation support receptacle pin 19 is formed in the vicinity of the center of gravity of the first strongback component 14, being formed as a protrusion projecting in a direction equivalent to the direction of projection of the upper lock pin 17. The fixing support receptacle pin 20 is formed in an area separated from the rotation support receptacle pin 19 by a predetermined distance, being formed as a protrusion projecting in a direction equivalent to the direction of projection of the upper lock pin 17.

The second strongback component 15 is formed separately from the first strongback component 14, and is also formed from steel. The second strongback component 15 forms about half of the strongback 8-i, being formed so as to follow the arc of a fan shape having a central angle of about 90°. A portion of the holding surface 10 and the second positioner receptacle 12 are formed on the second strongback component 15.

Furthermore, an upper pin stopper 21, a lower pin stopper 22, a rotation support receptacle pin 23, and a fixing support receptacle pin 24 are formed on the second strongback component 15. The upper pin stopper 21 is formed on an end of the second strongback component 15 opposite the end where the second positioner receptacle 12 is formed. An indentation is formed in the upper pin stopper 21. The indentation is oriented in a direction opposite the direction of projection of the second positioner receptacle 12. The lower pin stopper 22 is formed in an area that is separated from the upper pin stopper 21 by a predetermined distance toward the center of gravity of the second strongback component 15. An indentation is formed in the lower pin stopper 22. The predetermined distance is equivalent to the distance from the upper lock pin 17 to the lower lock pin 18. The indentation is oriented in the direction of projection of the second positioner receptacle 12.

The rotation support receptacle pin 23 is formed in the vicinity of the center of gravity of second strongback component 15, being formed as a protrusion. The direction of projection of the rotation support receptacle pin 23 is parallel to a normal direction of a plane in which the fan shape forming the second strongback component 15 is formed, and perpendicular to the direction of projection of the second positioner receptacle 12. That is, the direction of projection of the rotation support receptacle pin 23 is a horizontal direction in a situation where the second strongback component 15 is assembled into the strongback 8-i, and the center of gravity of the strongback 8-i is disposed on a vertically downward side of the chord joining both ends of the strongback 8-i. The fixing support receptacle pin 24 is formed in an area separated from the rotation support receptacle pin 23 by a predetermined distance, being formed as a protrusion projecting in a direction equivalent to the direction of projection of the rotation support receptacle pin 23.

The plurality of pads 16 are formed from hard nylon, each being formed in a plate shape. Each of the plurality of pads 16 adheres, via an adhesive, to a respective region of the holding surface 10, the regions being different from each other.

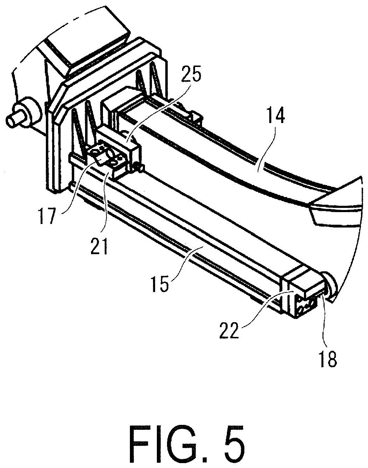

The strongback 8-i is further equipped with a retainer 25, as illustrated in FIG. 5. The retainer 25 is fixed to the second strongback component 15 using a fastening component, for example a bolt or a nut, such that the upper lock pin 17 is sandwiched between the retainer 25 and the upper pin stopper 21 of the second strongback component 15. That is, the retainer 25 presses the upper lock pin 17 vertically downward. The upper lock pin 17 is thus pressed into the upper pin stopper 21 such that the upper lock pin 17 is prevented from separating from the upper pin stopper 21.

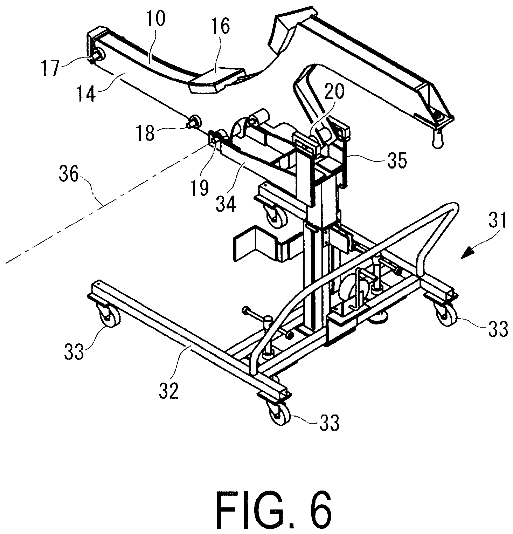

The above-described plurality of jigs further include a strongback transport wagon 31, as illustrated in FIG. 6. The strongback transport wagon 31 is equipped with a frame 32, a plurality of casters 33, a supporter 34, and a fixing tool 35. The plurality of casters 33 are each formed from a wheel supporting the frame 32 so as to be able to rotate. The wheels facilitate displacement of the frame 32 along the floor of the factory by rolling on the floor of the factory. The supporter 34 supports the first strongback component 14 by holding the rotation support receptacle pin 19 of the first strongback component 14 so as to enable the first strongback component 14 to rotate about a rotational axis 36 that is fixed with respect to the frame 32. The fixing tool 35 fixes the first strongback component 14 to the frame 32 by fixing the fixing support receptacle pin 20 to the frame 32 with the first strongback component 14 being supported by the frame 32 through the supporter 34.

The strongback transport wagon 31 is also able to support the second strongback component 15. At such a time, the supporter 34 supports the second strongback component 15 by holding the rotation support receptacle pin 23 of the second strongback component 15 so as to enable the second strongback component 15 to rotate about the rotational axis 36 that is fixed with respect to the frame 32. The fixing tool 35 fixes the second strongback component 15 to the frame 32 by fixing the fixing support receptacle pin 24 to the frame 32, with the second strongback component 15 being supported by the frame 32 through the supporter 34.

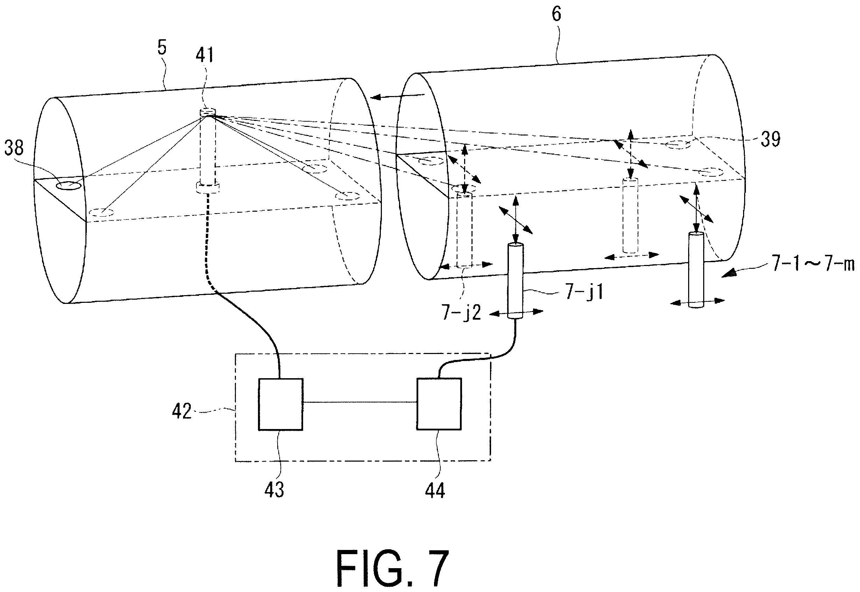

The reference trunk section 5 has a plurality of reference holes 38 formed inside, as illustrated in FIG. 7. The plurality of locations where the plurality of reference holes 38 are respectively formed are not less than four in number. The trunk section 6 has a plurality of reference holes 39 formed inside. The plurality of locations where the plurality of reference holes 39 are respectively formed are not less than four in number.

The trunk body bonding system is further equipped with a laser meter 41 and a control device 42. The laser meter 41 is arranged inside the reference trunk section 5. The laser meter 41, being controlled by the control device 42, measures a position at which a predetermined structure is disposed. A discretionary positioner 7-j1 from among the plurality of positioners 7-1 to 7-m is controlled by the control device 42 to displace the receptacle 13, and thus displace a structure loaded into the receptacle 13.

The control device 42 is equipped with a coordinate reading device 43 and a positioner control device 44. The coordinate reading device 43 controls the laser meter 41 so as to measure a plurality of reference positions where each of the plurality of reference holes 38 formed in the reference trunk section 5 are respectively arranged. The coordinate reading device 43 further controls the laser meter 41 so as to measure a plurality of positions where each of the plurality of reference holes 39 formed in the trunk section 6 are respectively arranged.

The positioner control device 44 calculates displacement information based on the reference positions of the plurality of reference holes 38 and on the positions of the plurality of reference holes 39, as measured by the coordinate reading device 43. The displacement information indicates a deviation between a predetermined position with respect to the reference trunk section 5 and the position where the trunk section 6 is disposed. The displacement information is calculated such that the trunk section 6 may be disposed at the predetermined position by displacing the trunk section 6 by the deviation. The positioner control device 44 further controls the plurality of positioners 7-1 to 7-m in accordance with position information, such that the trunk section 6 is disposed at the predetermined position with respect to the reference trunk section 5.

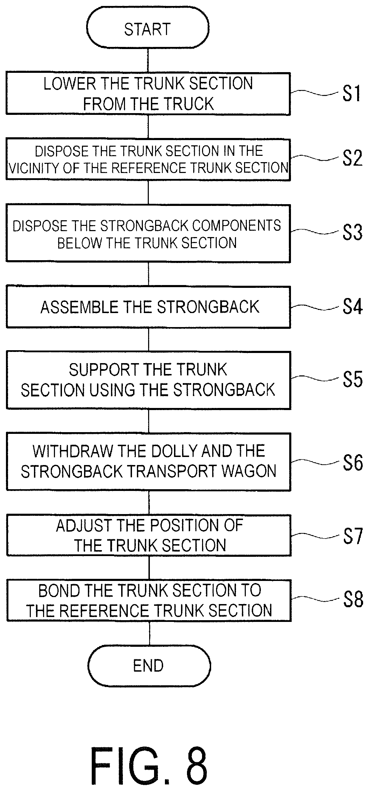

FIG. 8 illustrates an embodiment of a method for bonding fuselage. The trunk section 6 is transported into a factory space by a truck, while loaded on the dolly 2. The trunk section 6 is unloaded from the truck along with the dolly 2, using a forklift (step S1). After being unloaded from the truck along with the trunk section 6, the dolly 2 is coupled with the tractor 3. Once the dolly 2 has been coupled with the tractor 3, the tractor 3 is operated by a user to move within the factory. The tractor 3 thus disposes the trunk section 6, along with the dolly 2, in the vicinity of the reference trunk section 5, which is fixed to the floor of the factory via the reference trunk section support 1 (step S2).

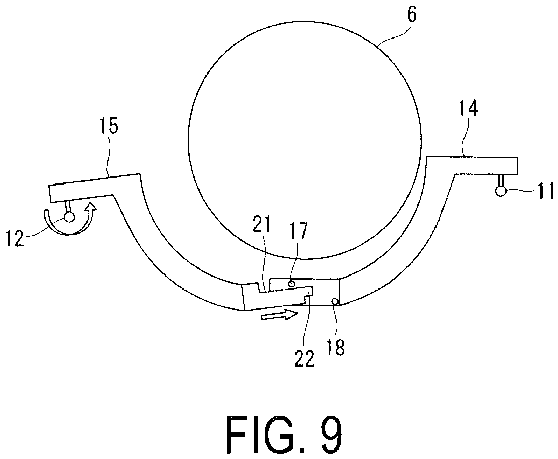

Once the trunk section 6 has been disposed in the vicinity of the reference trunk section 5, the first strongback component 14 is inserted between the trunk section 6 and the dolly 2 using the strongback transport wagon 31, and is disposed below the trunk section 6. Likewise, once the trunk section 6 has been disposed in the vicinity of the reference trunk section 5, the second strongback component 15 is inserted between the trunk section 6 and the dolly 2 using the strongback transport wagon 31, as illustrated in FIG. 9, and thus disposed below the trunk section 6 (step S3).

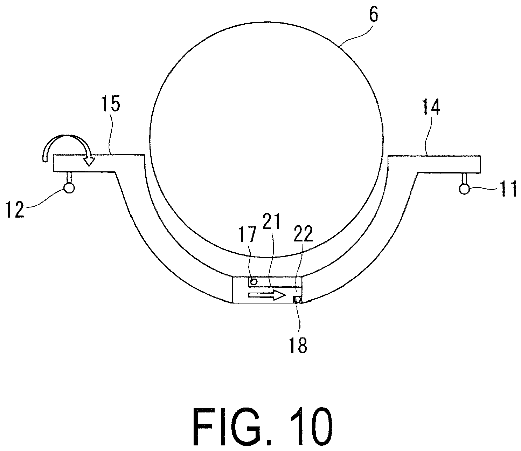

Once the first strongback component 14 and the second strongback component 15 have been disposed below the trunk section 6, one or both of the first strongback component 14 and the second strongback component 15 are rotated, the upper lock pin 17 engages with the upper pin stopper 21, and the lower lock pin 18 engages with the lower pin stopper 22. The first strongback component 14 and the second strongback component 15 are assembled into the strongback 8-i as illustrated in FIG. 10 by having the upper lock pin 17 engage with the upper pin stopper 21 and having the lower lock pin 18 engage with the lower pin stopper 22 (step S4). The plurality of strongbacks 8-1 to 8-m are each assembled below the trunk section 6, in a manner similar to that of strongback 8-i.

Furthermore, following assembly of the strongback 8-i, the retainer 25 is fixed to the second strongback component 15 such that the upper lock pin 17 presses into the upper pin stopper 21. The strongback 8-i is provided with the retainer 25. As such, this allows the disassembly of the strongback 8-i into the first strongback component 14 and the second strongback component 15 to be prevented.

Once the strongback 8-i has been assembled, the control device 42 controls the positioner 7-j1 to displace the receptacle 13 of the positioner 7-j1 such that the receptacle 13 of the positioner 7-j1 comes into appropriate contact with the first positioner receptacle 11 of the strongback 8-i. The control device 42 further controls the positioner 7-j2 to displace the receptacle 13 of the positioner 7-j2 such that the receptacle 13 of the positioner j2 comes into appropriate contact with the second positioner receptacle 12 of the strongback 8-i. Once the first positioner receptacle 11 has been loaded onto the receptacle 13 of the positioner 7-j1 and the second positioner receptacle 11 has been loaded onto the receptacle 13 of the positioner 7-j2, the first strongback component 14 is removed from the strongback transport wagon 31 and the second strongback component 15 is likewise removed from the strongback transport wagon 31. The plurality of strongbacks 8-1 to 8-m are also respectively removed from the strongback transport wagon 31, in a manner similar to that of the strongback 8-1.

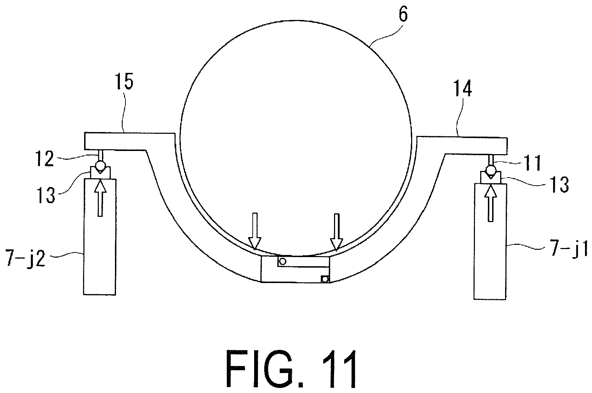

Once the first strongback component 14 and the second strongback component 15 have been removed from the strongback transport wagon 31, the control device 42 controls the positioner 7-j1 and the positioner 7-j2 to raise the strongback 8-i such that the strongback 8-i comes into appropriate contact with the lower part of the trunk section 6. The control device 42 also controls the plurality of positioners 7-1 to 7-m such that, in a manner similar to that of the strongback 8-i, the plurality of strongbacks 8-1 to 8-n are each in contact with a respective one of a plurality of areas on the lower part of the trunk section 6, as illustrated in FIG. 11.

Once the plurality of strongbacks 8-1 to 8-n are in contact with the lower part of the trunk section 6, the control device 42 further controls the plurality of positioners 7-1 to 7-m to raise the plurality of strongbacks 8-1 to 8-m, scoop up the trunk section 6 using the plurality of strongbacks 8-1 to 8-m, and raise the trunk section 6 such that the trunk section 6 is separated from the dolly 2. Once the trunk section 6 has been sufficiently separated from the dolly 2, the control device 42 controls the plurality of positioners 7-1 to 7-m to hold the trunk section 6 still (step S5).

Here, the holding surface 10 of the strongback 8-i may not be formed according to the planned shape because of elastic deformation caused by manufacturing error or, alternatively, by the dead weight of the strongback 8-i and the weight of the trunk section 6. Despite such a situation, the strongback 8-i supports the trunk section 6 via the plurality of pads 16. This enables the load applied by the strongback 8-i onto the trunk section 6 to be evenly dispersed, thus enabling the trunk section 6 to be appropriately supported. Furthermore, the trunk section 6 may be bonded to an accessory on an external plate. By modifying the plurality of areas where the plurality of pads 16 are respectively disposed such that the accessory does not come into contact with the plurality of pads 16, the strongback 8-i is able to prevent any negative effect on the accessory while enabling the trunk section 6 to be appropriately supported.

Here, the plurality of pads 16 may be replaced by another plurality of pads that are made from an elastic material other than hard nylon. The elastic material has a lower modulus of elasticity than the material forming the first strongback component 14 and the second strongback component 15, for example rubber. The strongback equipped with such a plurality of pads is also able to appropriately support the trunk section 6, in a manner similar to that of the strongback 8-i. Furthermore, the plurality of pads 16 may be omitted from the strongback when the strongback is able to sufficiently and appropriately support the trunk section 6 without the plurality of pads 16.

The strongback transport wagon 31 is fixed to the dolly 2 once the strongback 8-i has been sufficiently separated from the strongback transport wagon 31. Once the strongback transport wagon 31 has been fixed, the tractor 3 withdraws the dolly 2 from below the trunk section 6, along with the strongback transport wagon 31, using the tractor 3 (step S6).

Once the dolly 2 has been withdrawn from below the trunk section 6, the control device 42 controls the laser meter 41 to measure a plurality of reference positions where the plurality of reference holes 38 formed in the reference trunk section 5 are respectively arranged, and to measure a plurality of positions where the plurality of reference holes 39 formed in the trunk section 6 are respectively arranged. The control device 42 calculates a predetermined position with respect to the reference trunk section 5 based on the reference positions of the plurality of reference holes 38. The control device 42 calculates displacement information based on the predetermined position and the positions of the plurality of reference holes 39. The control device 42 disposes the trunk section 6 at the predetermined position by controlling the plurality of positioners 7-1 to 7-m in accordance with the position information (step S7). The trunk section 6 is bonded to the reference trunk section 5 upon being disposed at the predetermined position (step S8).

According to such a method for bonding fuselage, the trunk section 6 may be disposed in the vicinity of the reference trunk section 5 and supported by the plurality of positioners 7-1 to 7-m without the use of a crane.

In a comparative example of a method for bonding fuselage, the trunk section 6 is bonded to a plurality of outside fittings 101 on an external plate of the trunk section 6 using a fixing member, for example a bolt or nut, as illustrated in FIG. 3. A plurality of metal fittings are formed on the trunk section 6. The trunk section 6 is transported into the factory space by a truck. Thereafter, the trunk section 6 is transported along with the dolly 2 into a crane-accessible area, using a forklift. Once the trunk section 6 has been transported into the crane-accessible area, a sling 102 engages with the plurality of outside fittings 101. The trunk section 6 is then transported to the vicinity of the reference trunk section 5 by the crane.

Furthermore, the plurality of metal fittings formed on the outside plate of the trunk section 6 are loaded onto the respective receptacle 13 of each of the plurality of positioners 7-1 to 7-m using the crane. The trunk section 6 is thus supported by the plurality of positioners 7-1 to 7-m. Upon being supported by the plurality of positioners 7-1 to 7-m, the trunk section 6 is unloaded from the crane and the sling 102 is removed.

Once the trunk section 6 has been supported by the plurality of positioners 7-1 to 7-m, the control device 42 controls the laser meter 41 and the plurality of positioners 7-1 to 7-m in a manner similar to that of the method for bonding fuselage of the previously-described embodiment. As a result, the trunk section 6 is disposed in a predetermined position with respect to the reference trunk section 5. The trunk section 6 is bonded to the reference trunk section 5 after being disposed in the predetermined position.

The plurality of outside fittings 101 are unnecessary once the fuselage is complete, and are thus removed after being used by the crane. Once the plurality of outside fittings 101 have been removed from the trunk section 6, the regions of the external plate of the trunk section 6 where the plurality of outside fittings 101 were bonded are processed.

According to the method for bonding fuselage of the previously-described embodiment, the plurality of outside fittings 101 are unnecessary given that the trunk section 6 may be bonded to the reference trunk section 5 without the use of a crane. As a result, this method for bonding fuselage does not require steps of attaching and removing the plurality of outside fittings 101 to the external plate of the trunk section 6. In comparison to the method for bonding fuselage of the comparative example, this enables the trunk section 6 to be more easily bonded to the reference trunk section 5 and further facilitates the manufacturing of the fuselage.

Here, on the strongback 8-i, the upper lock pin 17 engages with the upper pin stopper 21 and the lower lock pin 18 engages with the lower pin stopper 22. As such, the retainer 25 may be omitted from the strongback 8-i when the first strongback component 14 and the second strongback component 15 are bonded with sufficient strength. The strongback from which the retainer 25 is omitted is also able to appropriately support the trunk section 6 in a manner similar to that of the strongback 8-i of the previously-described embodiment.

Also, when a sufficient space is provided between the trunk section 6 and the dolly 2, the strongback 8-i may be replaced by another strongback that is formed integrally. Upon having been inserted between the trunk section 6 and the dolly 2, such a strongback is supported by the positioner 7-j1 and the positioner 7-j2, and is raised along with the trunk section 6 by the positioner 7-j1 and the positioner 7-j2.

In comparison to such a strongback, the strongback 8-i of the previously-described embodiment may be more easily disposed below the trunk section 6 despite the space between the trunk section 6 and the dolly 2 being comparatively small, and thus more easily enables the trunk section 6 to be bonded to the reference trunk section 5.

Here, the trunk section 6 may also be displaced to the vicinity of the reference trunk section 5 without using the plurality of casters provided on the dolly 2. For example, the trunk section 6 may be disposed in the vicinity of the reference trunk section 5 using a forklift. This (method) also enables the trunk section 6 supported by the dolly 2 to be supported by the plurality of positioners 7-1 to 7-m without using a crane, and further facilitates the manufacturing of the fuselage.

### Reference Signs List

1 Reference trunk section support
2 Dolly
5 Reference trunk section
6 Trunk section
7-1 to 7-m Positioners
8-1 to 8-n Strongbacks
10 Holding surface
14 First strongback component
15 Second strongback component
16 Pads
17 Upper lock pin
18 Lower lock pin
21 Upper pin stopper
22 Lower pin stopper
25 Retainer
31 Strongback transport wagon

## Claims

1. A method for bonding fuselage, **characterized by** comprising the steps of:
scooping a trunk section (6) supported by a dolly (2) with a strongback (8-i) according to any one of claims 4 to 7;
disposing the trunk section (6) at a predetermined position by displacing the strongback (8-i) using a positioner (7-m); and
bonding the trunk section (6) to a reference fuselage (5) upon the trunk section (6) being disposed at the predetermined position.

2. The method according to claim 1, further comprising the steps of:
inserting a first strongback portion (14) below the trunk section (6);
inserting a second strongback portion (15) below the trunk section (6); and
assembling the first strongback portion (14) and the second strongback portion (15) into the strongback (8-i) below the trunk section (6).

3. The method according to claim 1 or 2, further comprising the step of bringing the dolly (2) along with the trunk section (6) close to the positioner (7-m) by using a caster provided on the dolly (2).

4. A strongback (8-i), comprising:
a first strongback portion (14); and
a second strongback portion (15) distinct from the first strongback portion (14),
**characterized in that**
a first holding surface (10), a first lock pin (17), and a second lock pin (18) are formed on the first strongback portion (14),
and a second holding surface (10), a first pin stopper (21), and a second pin stopper (22) are formed on the second strongback portion (15),
wherein first strongback portion (14) the second strongback portion (15) are configured to be respectively disposed below a trunk section (6) from among a plurality of trunk sections to be assembled into a fuselage,
wherein the first strongback portion (14) is configured to be fixed to the second strongback portion (15) and assembled into the strongback (8-i) by the first lock pin (17) engaged with the first pin stopper (21) and the second lock pin (18) engaged with the second pin stopper (22), and
wherein the first holding surface (10) and the second holding surface (10) facing the trunk section (6) upon the trunk section (6) being scooped up by the strongback (8-i).

5. The strongback (8-i) according to claim 4, wherein the first and second strongback portion (14,15) are configured such that the first lock pin (17) is engaged with the first pin stopper (21) and the second lock pin (18) is engaged with the second pin stopper (22) in that one or both of the first and second strongback portion (14,15) is/are rotated.

6. The strongback (8-i) according to claim 4 or 5, further comprising a plurality of pads (16) disposed on the first holding surface (10) and on the second holding surface (10),
the plurality of pads (16) having a modulus of elasticity that is smaller than a modulus of elasticity of the first strongback portion (14).

7. The strongback (8-i) according to claim 4, 5 or 6, further comprising a retainer (25) pressing the first lock pin (17) into the first pin stopper (21).

## Patentansprüche

1. Ein Verfahren zum Bonden eines Rumpfs, **dadurch gekennzeichnet, dass** es die folgenden Schritte aufweist:
Aufnehmen eines Rumpfabschnitts (6), der durch einen Transportwagen (2) getragen ist, mit einem Stützbalken (8-i) gemäß einem der Ansprüche 4 bis 7,
Anordnen des Rumpfabschnitts (6) an einer vorbestimmten Position durch Versetzen des Stützbalkens (8-i) unter Verwendung einer Positionierungseinrichtung (7-m),
Bonden des Rumpfabschnitts (6) an einen Referenzrumpf (5), wenn der Rumpfabschnitt (6) an der vorbestimmten Position angeordnet ist.

2. Das Verfahren gemäß Anspruch 1, ferner mit den folgenden Schritten:
Einsetzen eines ersten Stützbalkenabschnitts (14) unter den Rumpfabschnitt (6),
Einsetzen eines zweiten Stützbalkenabschnitts (15) unter den Rumpfabschnitt (6), und
Zusammenbauen des ersten Stützbalkenabschnitts (14) und des zweiten Stützbalkenabschnitts (15) zu dem Stützbalken (8-i) unter dem Rumpfabschnitt (6).

3. Das Verfahren gemäß Anspruch 1 oder 2, ferner mit dem Schritt des Bringens des Transportwagens (2) zusammen mit dem Rumpfabschnitt (6) nahe zu der Positionierungseinrichtung (7-m) durch Verwendung einer Laufrolle, die an dem Transportwagen (2) vorgesehen ist.

4. Ein Stützbalken (8-i) mit:
einem ersten Stützbalkenabschnitt (14), und
einem zweiten Stützbalkenabschnitt (15), der von dem ersten Stützbalkenabschnitt (14) unterschiedlich ist,
**dadurch gekennzeichnet, dass**
eine erste Halteoberfläche (10), ein erster Verriegelungsbolzen (17) und ein zweiter Verriegelungsbolzen (18) an dem ersten Stützbalkenabschnitt (14) ausgebildet sind, und
eine zweite Halteoberfläche (10), ein erster Bolzenstopper (21) und ein zweiter Bolzenstopper (22) an dem zweiten Stützbalkenabschnitt (15) ausgebildet sind,
wobei der erste Stützbalkenabschnitt (14) und der zweite Stützbalkenabschnitt (15) konfiguriert sind, um jeweils unter einem Rumpfabschnitt (6) von einer Vielzahl von Rumpfabschnitten, die zu einem Rumpf zusammenzubauen sind, angeordnet zu werden,
wobei der erste Stützbalkenabschnitt (14) konfiguriert ist, um an dem zweiten Stützbalkenabschnitt (15) befestigt und zu dem Stützbalken (8-i) zusammengebaut zu werden, indem der erste Verriegelungsbolzen (17) in Eingriff mit dem ersten Bolzenstopper (21) und der zweite Verriegelungsbolzen (18) in Eingriff mit dem zweiten Bolzenstopper (22) gebracht wird, und
wobei die erste Halteoberfläche (10) und die zweite Halteoberfläche (10) dem Rumpfabschnitt (6) zugewandt sind, wenn der Rumpfabschnitt (6) durch den Stützbalken (8-i) aufgenommen wird.

5. Der Stützbalken (8-i) gemäß Anspruch 4, wobei der erste und der zweite Stützbalkenabschnitt (14,15) so konfiguriert sind, dass der erste Verriegelungsbolzen (17) mit dem ersten Bolzenstopper (21) in Eingriff gebracht ist und der zweite Verriegelungsbolzen (18) mit dem zweiten Bolzenstopper (22) in Eingriff gebracht ist, indem einer oder beide von dem ersten und dem zweiten Stützbalkenabschnitt (14,15) gedreht wird/werden.

6. Der Stützbalken (8-i) gemäß Anspruch 4 oder 5, ferner mit einer Vielzahl von Kissen (16), die an der ersten Halteoberfläche (10) und an der zweiten Halteoberfläche (10) angeordnet sind,
wobei die Vielzahl von Kissen (16) ein Elastizitätsmodul besitzen, der kleiner ist als ein Elastizitätsmodul des ersten Stützbalkenabschnitts (14).

7. Der Stützbalken (8-i) gemäß Anspruch 4,5 oder 6, ferner mit einer Halteeinrichtung (25), die den ersten Verriegelungsbolzen (17) in den ersten Bolzenstopper (21) drückt.

## Revendications

1. Procédé de collage d'un fuselage, **caractérisé en ce qu'**il comprend les stades de :
former une partie (6) de tronc supportée par un chariot (2), ayant une poutre de renfort (8-i) suivant l'une quelconque des revendications 4 à 7 ;
mettre la partie (6) de tronc en une position déterminée à l'avance, en déplaçant la poutre de renfort (8-i) en utilisant un dispositif (7-m) de mise en position ; et
coller la partie (6) de tronc à un fuselage (5) de référence, alors que la partie (6) de tronc est disposée à la position déterminée à l'avance.

2. Procédé suivant la revendication 1, comprenant, en outre, les stades de :
insérer une première partie (14) de la poutre de support en dessous de la partie (6) de tronc ;
insérer une deuxième partie (15) de la poutre de support en dessous de la partie (6) de tronc ; et
assembler la première partie (14) de poutre de support et la deuxième partie (15) de poutre de support en la poutre de renfort (8-i) en dessous de la partie (6) de tronc.

3. Procédé suivant la revendication 1 ou 2, comprenant, en outre, le stade dans lequel on met le chariot (2) le long de la partie (6) de tronc près du dispositif (7-m) de mise en position en utilisant une roulette prévue sur le chariot (2).

4. Poutre de renfort (8-i), comprenant :
une première partie (14) de poutre de support ; et
une deuxième partie (15) de poutre de support distincte de la première partie (14) de poutre de support,
**caractérisée en ce que**
une première surface (10) de maintien, une première broche (17) de verrouillage et une deuxième broche (18) de verrouillage sont formées sur la première partie (14) de poutre de support,
et une deuxième surface (10) de maintien, un premier tampon (21) de broche et un deuxième tampon (22) de broche sont formés sur la deuxième partie (15) de poutre de support,
dans laquelle la première partie (14) de poutre de support et la deuxième partie (15) de poutre de support sont configurées pour être disposées, respectivement, en dessous d'une partie (6) de tronc parmi une pluralité de parties de tronc à assembler en un fuselage,
dans laquelle la première partie (14) de poutre de support est configurée pour être fixée à la deuxième partie (15) de poutre de support et assemblée en la poutre de renfort (8-i) par la première broche (17) de verrouillage enclenchée avec le premier tampon (21) de broche et la deuxième broche (18) de verrouillage enclenchée avec le deuxième tampon (22) de broche, et
dans laquelle la première surface (10) de maintien et la deuxième surface (10) de maintien font face à la partie (6) de tronc après que la partie (6) de tronc a été formée au-dessus de la poutre (8-i) de renfort.

5. Poutre de renfort (8-i) suivant la revendication 4, dans laquelle les première et deuxième parties (14, 15) de poutre de renfort sont configurées de manière à ce que la première broche (17) de verrouillage soit encliquetée avec le premier tampon (21) de broche et de manière à ce que la deuxième broche (18) de verrouillage soit encliquetée avec le deuxième tampon (22) de broche par le fait que l'une ou les deux de la première et de la deuxième parties (14, 15) de poutre de support est/sont tournée(s).

6. Poutre de renfort (8-i) suivant la revendication 4 ou 5, comprenant, en outre, une pluralité de patins (16) disposés sur la première surface (10) de maintien et sur la deuxième surface (10) de maintien,
la pluralité de patins (16) ayant un module d'élasticité qui est plus petit qu'un module d'élasticité de la première partie (14) de la poutre de support.

7. Poutre de renfort (8-i) suivant la revendication 4, 5 ou 6, comprenant, en outre, un arrêtoir (25) pressant la première broche (17) de verrouillage dans le premier tampon (21) de broche.
